Europäisches Patentamt

European Patent Office

Office européen des brevets

(19)

(11) Veröffentlichungsnummer: **0 370 450**
**A2**

(12) # EUROPÄISCHE PATENTANMELDUNG

(21) Anmeldenummer: **89121493.4**

(22) Anmeldetag: **21.11.89**

(51) Int. Cl.5: **A24C 5/20, F16G 1/00**

(30) Priorität: **24.11.88 DE 3839549**

(43) Veröffentlichungstag der Anmeldung:
**30.05.90 Patentblatt 90/22**

(84) Benannte Vertragsstaaten:
**CH FR GB IT LI**

(71) Anmelder: **MAX SCHLATTERER GMBH & CO. KG**
**Alt-Ulmer-Strasse**
**D-7922 Herbrechtingen(DE)**

(72) Erfinder: **Die Erfinder haben auf ihre Nennung verzichtet**

(74) Vertreter: **Mayer, Friedrich, Dr.**
**Patentanwälte Dr. Mayer & Frank Westliche 24**
**D-7530 Pforzheim(DE)**

(54) Förderband zum Fördern eines Tabakstranges.

(57) Ein luftdurchlässiges, umlaufendes Förderband zum Fördern eines Tabakstranges in einer Zigarettenstrangmaschine besteht aus parallel zueinander angeordneten Kettfäden (31) und parallel zueinander angeordneten Abschnitten (30a) von Schußfäden (30), deren Kreuzungspunkte in einem regelmäßigen Gitter liegen. Wenigstens ein Kettfaden (31) und/oder wenigstens ein Schußfaden (30) besteht aus wenigstens einer Trägerfaser und aus wenigstens einer Schmelzfaser. Die durch Verschmelzen aus den Kreuzungspunkten entstehenden Bindungspunkte (32) sind linear angeordnet. Dadurch kann durch gezieltes Verkleben der Schußfäden mit den Kettfäden die Ablösung einzelner Faserteilchen verhindert werden, ohne die Luftdurchlässigkeit des Bandes zu verringern.

FIG. 8

EP 0 370 450 A2

## Förderband zum Fördern eines Tabakstranges.

Die Erfindung betrifft ein luftdurchlässiges, umlaufendes Förderband zum Fördern eines Tabakstranges entsprechend dem Oberbegriff des Patentanspruches 1.

Unter dem Begriff "linear" im Sinne des Patentanspruches 1 wird dabei eine Linearität der Bindungspunkte in Richtung der eingearbeiteten Schmelzfaser verstanden. Ist die Schmelzfaser in einem Kettfaden eingearbeitet, so liegen die Bindungspunkte in Längsrichtung des Bandes, ist sie in einem Schußfaden eingearbeitet, so liegen die Bindungspunkte in Richtung des Schußfadens quer zum Band, wobei bei Berücksichtigung der Randschleifen des Schußfadens zumindest innerhalb des Bandes die Bindungspunkte linear angeordnet sind. Die Bindungspunkte liegen also immer längsseitig und/oder quer im Band linear.

Der Begriff "Schmelzen" ist dabei als ein Überführen der Schmelzfaser in einen vorübergehenden verflüssigten Zustand zu verstehen. Das "Schmelzen" wird dabei entweder durch Zufuhr von Wärme in irgendeiner Form oder durch Zufuhr von Lösungsmitteln erreicht, wobei im zweiten Fall das "Schmelzen" auch als eine gezielte Zersetzung oder Anlösung der Schmelzfaser anzusehen ist. Insofern sind dann unter höher schmelzenden Fasern gegenüber den Lösungsmitteln weniger empfindliche und unter nieder schmelzenden Fasern gegenüber den Lösungsmitteln empfindlichere Fasern zu verstehen.

Aus der DE-OS 35 38 928 ist ein derartiges Förderband zum Fördern eines Tabakstranges bekannt. Diese Förderbänder werden in modernen Zigarettenstrangmaschinen mit Unterdruck beaufschlagt. Durch den Unterdruck werden in einem Verteiler ausgebreitete Tabakfasern von unten auf das umlaufende Förderband, auf den sogenannten Saugstrangförderer aufgeschauert. Die durch das luftdurchlässige Förderband zur Unterdruckkammer hindurchtretende Luftströmung führt die Tabakfasern aus dem Tabakschauer zum Band hin und hält sie hängend am Band fest, bis sie als Faserstrang am Formateinlauf der Maschine auf das Zigarettenpapier abgelegt werden. Wegen der schnellen Maschinengeschwindigkeit muß zum guten Transport des Tabakstranges das Band eine hohe Porösität und Oberflächenrauhigkeit aufweisen. Das Bandgewebe des Saugbandes ist daher vorzugsweise aus Kunstfasern mit geeigneten Gewebebindungen hergestellt. Dieses Saugband muß extremen Anforderungen standhalten, denn einerseits muß mit minimaler Gewebesubstanz gearbeitet werden, um die hohe Luftdurchlässigkeit zu erreichen und andererseits ist das Gewebe aufgrund der hohen Betriebsgeschwindigkeiten von über 600 m/min einem sehr hohen Verschleiß unterworfen. Als Folge dieser äußeren Randbedingungen besteht die Möglichkeit, daß abgesonderte Fasern des Bandes in den Tabak gelangen, wobei diese Fasern den Geschmack beeinflussen können.

Es ist auch bekannt, ein derartiges Förderband einzusetzen, das aus einer lockeren Kette bzw. aus einem lockeren Schuß besteht und durch eine erhöhte Kettendichte an der Webkante und in der Bandmitte verstärkt ist (FR-PS 12 38 895). Das Band wird in einem abschließenden Verfahren unter Spannung gestreckt und bei einer Temperatur zwischen 100°C bis 120°C im gestreckten Zustand durch Fixierung der gestreckten Polymerketten festgelegt. Ein Schmelzen und somit ein thermischer Umwandlungsprozeß der verwendeten Materialien findet dabei jedoch nicht statt.

Ferner ist es bekannt, ein Garniturband in einer Zigarettenstrangmaschine nach dem Weben mit einer mit dem Lösungsmittel versetzten Schlichtelösung zu tränken und anschließend zur Fixierung wärmezubehandeln. Ein gezieltes Fixieren bestimmter Bereiche, wie z.B. der Webkanten, ist dabei jedoch nicht zu verwirklichen. Überdies wird bei diesem Verfahren das ursprüngliche Gewebe nicht angelöst. Eine Zersetzung der verwendeten Materialien und damit ein Fließen des Materials wie bei einem Schmelzvorgang tritt dabei nicht ein. Zudem ist eine Luftdurchlässigkeit, wie sie bei einem Saugband erforderlich ist, nicht nötig (DE-OS 26 40 949).

In der Bekleidungsindustrie ist es bekannt, Kombigarne einzusetzen, die weder reine Hochleistungsnähgarne, noch reine Schmelzklebegarne sind. Sie vereinigen jedoch gewisse Vorteile beider Produkte in sich und haben grundlegende Vorteile gegenüber heißsiegelbaren Einlagen. Diese Kombigarne werden vorzugsweise als Trenngarne, zum Heften oder zum Fixieren von einzelnen Zuschnitten eingesetzt und werden später rückstandslos wieder entfernt. Sie können jedoch auch zur Verstärkung von Krägen, Aufschlägen und dergleichen eingesetzt werden. Dabei kommt es jedoch nicht darauf an, die Bindungspunkte auf einen bestimmten Bereich zu beschränken (Prodpekt der EMS-GRILON SA, CH-7013 Domat/Ems "Swiss Polyamid Grilon, Schmelzklebegarne für die Bekleidungsindustrie").

Die Erfindung stellt sich nun zur Aufgabe, ein Förderband der oben genannten Gattung derart weiterzubilden, daß durch gezieltes Verkleben der Schußfäden mit den Kettfäden die Ablösung einzelner Faserteilchen verhindert wird, ohne die Luftdurchlässigkeit des Bandes zu verringern.

Diese Aufgabe wird durch die im Kennzeichen des Patentanspruches 1 genannten Merkmale gelöst.

Bei einer solchen Ausbildung wird durch ein gezieltes Anbringen des Klebers in Form von Schmelzfasern eines Kett- oder Schußfadens an einzelnen Kreuzungspunkten des Gewebes die hohe Luftdurchlässigkeit aufrechterhalten, gleichzeitig aber eine verstärkte Verbindung zwischen Schuß- und Kettfäden erreicht, da die Schmelzfasern in einer nachfolgenden Behandlung aufschmelzen und sich an den Kreuzungspunkten um die Fäden legen. Das Förderband erreicht überdies eine hohe Verschleißfestigkeit und einen hohen Maschinenwirkungsgrad. Die Abstände zwischen den einzelnen Bandwechseln werden verlängert. Durch dieses Einarbeiten kann das Fließverhalten dieser Kunststoff-Fasern, vor allem während ihres Schmelzens, gezielt gesteuert werden und damit ein unkontrolliertes, flächenmäßiges Ausbreiten der Schmelzfaser verhindert werden.

Bei einer Ausbildung entsprechend dem Anspruch 2 werden durch einen vorgeschalteten Zwirnprozeß die nieder schmelzenden Kunststoff-Fasern mit höher schmelzenden bzw. nicht schmelzenden oder sich zersetzenden Trägerfasern zu einem kompakten Faden verarbeitet. Bei einer Ausbildung des Saugbandes entsprechend dem Anspruch 4 ergibt sich eine weitere Möglichkeit, den Schmelzkleber der Schmelzfasern genau an den Kreuzungspunkten anzubringen. Dieser Zweikomponentenfaden kann zur Verstärkung des Klebeeffektes vorzugsweise auch als Schußfaden eingebracht werden.

Bei einer Ausbildung entsprechend dem Anspruch 9 kommt durch eine Verstärkung der Ränder ein weiterer Vorteil dieses Saugbandes zum Tragen. Durch die hohe Maschinengeschwindigkeit und die dadurch bedingte Reibung kommt es nämlich im Vakuumbereich des Saugstrangförderers an den Führungselementen zu erheblichem Verschleiß. Der mechanische Verschleiß an diesen Führungselementen wird durch den Tabakstaub, der sich an den Bandkanten durch das Band durchsetzt und in den Bandführungen ansammelt, wesentlich erhöht. Ist das Saugband an den Rändern verstärkt, können die Tabakteilchen das Saugband in diesem Bereich nicht mehr durchdringen. Dadurch wird der Verschleiß an den Maschinenteilen und am Transportband wesentlich reduziert.

Im folgenden wird die Erfindung anhand der Zeichnungen näher erläutert.

Es zeigen:

Fig. 1 Eine schematische Seitenansicht eines Saugstrangförderers einer Zigarettenstrangmaschine,

Fig. 2,3 eine schematische Darstellung von porösen, luftdurchlässigen Geweben in Leinwandbindung L 1/1 und in Köperbindung K 2/2,

Fig. 4 den erfindungsgemäßen Aufbau eines Fadens,

Fig. 5 den Aufbau eines Zweikomponentenfadens,

Fig. 6 einen Schnitt durch den Saugstrangförderer nach Linie VI-VI von Fig. 1 in vergrößerter Darstellung,

Fig. 7,8 einen Teil des Förderbandes nach Verschmelzen der Schmelzfaser, wobei die Schmelzfaser im Kettfaden, bzw. im Schußfaden verwendet ist,

Fig. 9 einen Teil des Förderbandes gemäß Fig. 7 vor Verschmelzen der Schmelzfaser.

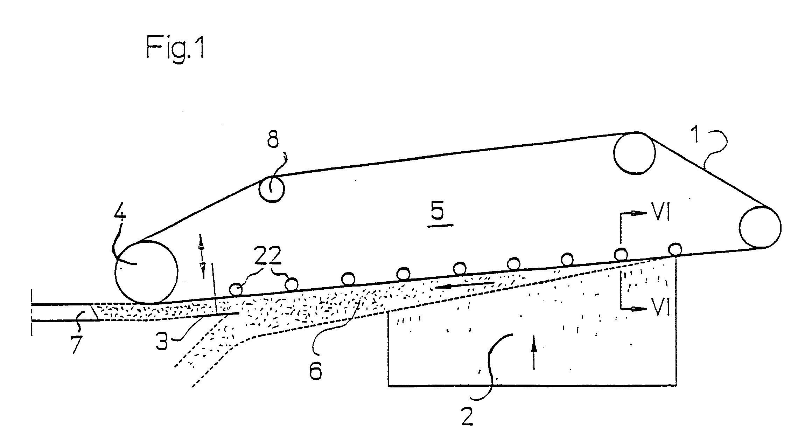

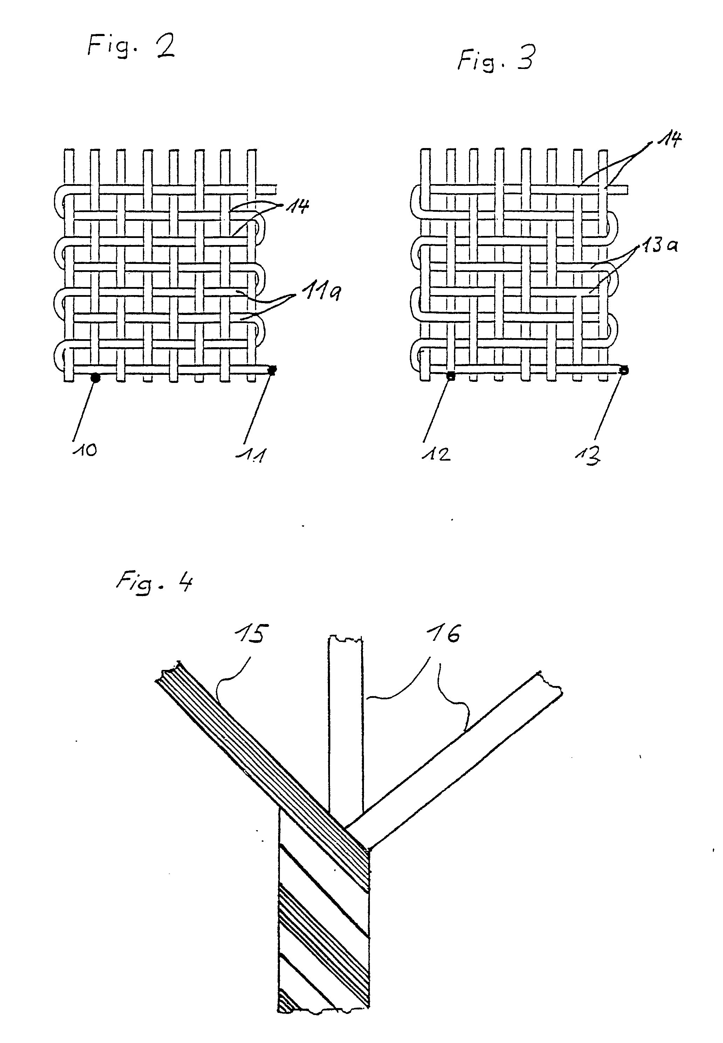

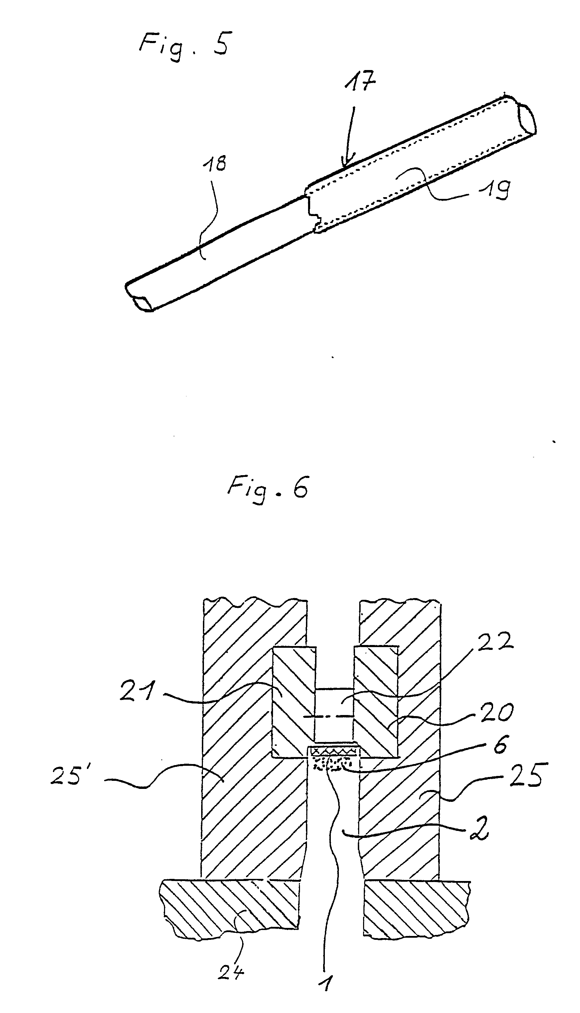

In Fig. 1 wird schematisch ein Saugband einer Zigarettenstrangmaschine zum Fördern eines Tabakstranges gezeigt. Das Band läuft in einem schmalen, wie in Fig. 6 schematisch dargestellten Vakuumschacht 2 und ist an Führungsleisten 20,21 geführt. Diese Führungsleisten 20,21 ragen zur Führung des Förderbandes 1 geringfügig aus den Tabakführungsleisten 25,25′ in den Vakuumschacht 2 hinein. Der Tabak 6 wird durch ein in der Vakuumkammer 5 erzeugtes Vakuum im Vakuumschacht entlang den Wandungen 24 des Vakuumschachtes 2 auf das Förderband 1 aufgeschauert. Um ein Hineinziehen des Förderbandes 1 in die Vakuumkammer 5 zu vermeiden, sind entlang des unteren Trums des Förderbandes 1 Rollen 22 zum Abstützen des Bandes angeordnet. Das Förderband wird von Antriebsrollen 4 angetrieben und über Umlenkrollen 8 umgelenkt. Der ungleichmäßig aufgeschauerte Tabak 6 wird an einem Trimmer 3 abgeschnitten und begradigt. Der so erzeugte Tabakstrang wird dann auf einen im Gleichlauf geführten Zigarettenpapierstreifen 7 abgelegt. Der Zigarettenpapierstreifen 7 wird von einer zeichnerisch nicht dargestellten Bobine abgezogen. Zigarettenpapierstreifen 7 und abgelegter Tabak 6 werden im weiteren Verlauf der Herstellung zum Endprodukt, der Zigarette, geformt. Wie aus Figur 2 und 3 ersichtlich, besteht das luftdurchlässige, umlaufende Förderband 1 aus parallel zueinander angeordneten Kettfäden 10,12,28,31 und parallel zueinander angeordneten Abschnitten 11a,13a,27a,30a von Schußfäden 11,13,27,30. Kettfäden und Schußfäden bilden in einem regelmäßigen Gitter liegende Kreuzungspunkte 14. Dabei besteht wenigstens ein Kettfaden 28,31 und/oder wenigstens ein Schußfaden 27,30 aus wenigstens einer Trägerfaser 16,18 und aus wenigstens einer Schmelzfaser 15,19 (Fig. 4,5). Durch eine nachfolgende Behandlung unter Aufbringen einer Spannung werden die Kreuzungspunkte 14 zu Bindungspunkten 29,32 verbunden, so daß Kett- und Schußfäden fest miteinander verbunden sind. Aufgrund des Einbringens der Schmelzfaser 15,19 in Verbindung mit einem Schuß- oder Kettfaden sind die Bindungspunkte 29,32 linear angeordnet. Die Kettfäden 10,12,28,31 und die Schußfäden 11,13,27,30 bestehen aus Kunststoff.

Die auf dem Schmelzen der Schmelzfasern basierende Bindung wird dabei durch ein zumindest teilweises Aufheizen des ganzen Bandes auf die Schmelztemperatur der Schmelzfaser erreicht. Eventuell kann die Wärme auch nur partiell in bestimmten Bereichen des Bandes aufgebracht werden.

Die monofile oder multifile Schmelzfaser besteht aus niederschmelzendem oder gegenüber Lösungsmitteln empfindlichem Kunststoff, während die Trägerfasern aus einem Material mit höherem Schmelzpunkt bestehen. Der aus Schmelzfaser 15,19 und Trägerfaser 16,18 hergestellte Faden wird auf unterschiedliche Weise in das Bandgewebe eingebracht. Zunächst besteht die Möglichkeit, die Schmelzfaser mit anderen höher schmelzenden oder gegenüber Lösungsmitteln unempfindlichen Trägerfasern 16 zur Bildung eines Fadens zu verzwirnen. Fig. 4 verdeutlicht die Struktur eines solchen Fadens. Beispielsweise sind die Trägerfasern 16 in einer Spirale parallel zu den Schmelzfasern 15 gewunden und verzwirnt. Es besteht jedoch auch die Möglichkeit, Trägerfasern in einer geraden Linie entlang der Achse des Fadens zu legen und einige Trägerfasern 16 und Schmelzfasern 15 oder nur Schmelzfasern 15 in einer Spirale um jene Trägerfasern 16 herumzuwinden.

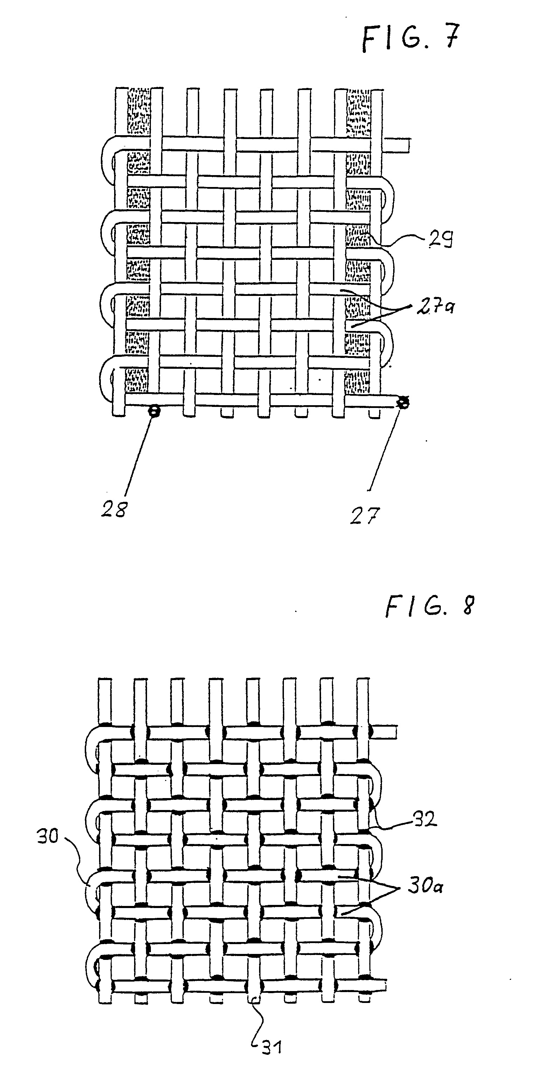

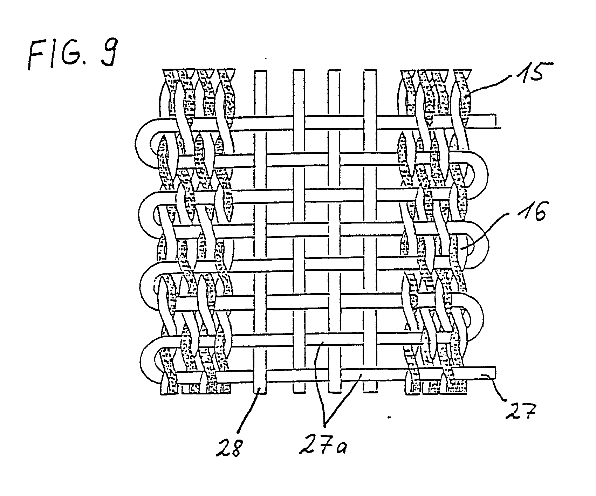

Eine weitere Möglichkeit besteht darin, die Schmelzfaser mit der Trägerfaser gefacht einzubringen. Ein derartiges Band, das bereits der erforderlichen Nachbehandlung unterzogen worden ist, ist in Fig. 7 dargestellt. Dabei bilden sich jedoch bei der nachfolgenden Behandlung an den Bindungspunkten 29,32 Wärmenester, so daß das Verschmelzen weniger kontrolliert abläuft als bei der ersten Variante. Die erste Möglichkeit bietet darüberhinaus die Möglichkeit, den Faden als homogenen Faden einzusetzen, der in das Gewebe an beliebiger Stelle eingewebt werden kann. Diese Möglichkeit ergibt sich auch bei einer weiteren Ausbildung, bei der der Faden 17 ein Zweikomponentenfaden ist, dessen Kern 18 als Trägerfaser und dessen Hülle 19 als Schmelzfaser ausgebildet ist. Ein derartiger Zweikomponentenfaden kann vorzugsweise als Schußfaden zur weiteren Verstärkung des Gewebes eingesetzt werden und bildet dann bei entsprechender Dosierung der Schmelzfaser ein Gewebe entsprechend Figur 8.

Bei einer multifilen Schmelzfaser, die zum Beispiel aus Polyamiden oder Polyestern besteht, kann die für das Schmelzen erforderliche Temperatur durch Mischen von Gruppe verschiedener Schmelzfasern, wie zum Beispiel der Polyamidgruppen 6 mit einer Schmelztemperatur von 190° C und der Polyamidgruppe 12 mit einer Schmelztemperatur von 140° C, bis zur eutektischen Temperatur abgesenkt werden. Die Schmelzfaser kann auch aus einer extrudierten Monofilfaser bestehen.

Das Verschmelzen erfolgt in einer nachfolgenden Behandlung durch Zufuhr von Wärme. Ebenso kann das Verkleben der Schmelzfaser durch Zufuhr von Lösungsmitteln, bzw. von Lösungsmitteldämpfen oder durch Zufuhr von Wärme und Feuchtigkeit, z.B. in Form von Wasserdampf, erreicht werden.

Das Verflüssigen der Schmelzfaser bei der Herstellung des Förderbandes erfolgt somit entweder durch Wärmezufuhr mittels entsprechender Wärmequelle oder durch Wasserdampfzufuhr in einem Heizungsschacht. Bei Verwendung von Lösungsmitteln wird das Band durch ein geeignetes Bad hindurch geführt, bis ein Anlösen der Schmelzfaser stattfindet. Dabei kann durch geeignete Maßnahmen eine Beeinträchtigung der Umwelt vermieden werden. So kann beispielsweise auch Wasser als Lösungsmittel verwendet werden.

Die Menge der Schmelzfaser im Vergleich zur Menge der Trägerfaser beeinflußt die Stärke und Größe der Bindungspunkte. Dabei bildet sich die Verklebung durch das Einbringen der Schmelzfaser in einem Faden vorzugsweise in Richtung des Fadens aus, so daß ein gezieltes Verkleben möglich wird.

Wie aus Fig. 7, 9 ersichtlich, wird durch verringerte Seitenabstände der Kettfäden 28 bei Einbringung der Schmelzfaser in einem Kettfaden und bei entsprechender Dosierung der Schmelzfasern ein geschlossener Klebebereich von aneinandergereihten Bindungspunkten 29 erzeugt.

Der Schmelzpunkt der Schmelzfaser liegt bei ungefähr 80° C bis 120° C. Dieser Temperaturbereich wird während des Einsatzes des Bandes in der Zigarettenstrangmaschine nicht erreicht, da das Band durch die Luftströmung ständig gekühlt wird. Ein derartig hergestelltes Band, das aus Polyamidfasern hergestellt ist, weist folgende Eigenschaften auf. Bei Verwendung einer Köperbindung entsprechend Figur 3 erhält das Band eine rauhe Oberfläche. Es besitzt eine zugesicherte Temperaturbeständigkeit bis 80° C, die Banddehnung beträgt bezogen auf die Bandbreite von 8,2 mm bei Aufbringen einer Kraft von 50 Newton 1%. Die Reißfestigkeit des Bandes beträgt bezogen auf die Bandbreite im Band 450 Newton und an der Schweißstelle, an der die beiden Enden miteinander verschweißt sind, 350 Newton. Ein derartiges Band ist üblicherweise 4 m lang, 8 mm breit und besitzt eine Stärke von 0,75 mm. Der Luftdurchgang durch dieses Band beträgt bei einer Meßfläche von 700 mm$^2$ und einem Vakuum von 15mbar, 42 m$^3$/h.

Im konkreten Ausführungsbeispiel bestehen Kett- und Schußfaden aus Polyamid Monofilament.

Die Schmelzfaser besteht dabei aus einem Polyamid, das einen niedrigeren Schmelzpunkt besitzt als die zugehörige Trägerfaser. Im Falle einer Zersetzung der Schmelzfaser durch Lösungsmittel werden vorzugsweise Polyamidcopolymere verwendet, wobei als Lösungsmittel z.B. Methanol Verwendung findet. In jedem Fall bewegt sich die Stärke der einzelnen Fäden hauptsächlich in einem Bereich zwischen 0.2 und 0.3 mm. Bedarfsweise können jedoch auch andere Stärken verwendet werden. Werden Schmelz- und Trägerfaser gefacht verarbeitet, so liegen zwei Teilfäden nebeneinander, die aus dem jeweils für die einzelnen Fasern verwendeten Material bestehen und je eine Stärke im angegebenen Bereich besitzen. Bei Verwendung eines Zweikomponentenfadens besitzt der Kern 18 die gleiche Stärke, wie in den anderen Ausführungsbeispielen. Über diesen Kern 18 legt sich die Hülle in einer Stärke von vorzugsweise 0.02 bis 0.05 mm. Im Saugband 1 selbst beträgt im konkreten Ausführungsbeispiel die Kettfadendichte 27 Faden/cm und die Schußfadendichte 14 Schuß/cm.

Als Schmelzfasern finden beispielsweise Thermoplaste Verwendung, wie zum Beispiel Polyamide oder Polyurethane, die im besagten Temperaturbereich schmelzen. Beim Schmelzen werden diese Schmelzfasern in ihrer Kettenstruktur verändert und legen sich um die Kreuzungspunkte. Die Zufuhr der Schmelzfasern zum Saugband kann beispielsweise auch durch punktweises Aufbringen, etwa durch einen programmgesteuerten Automaten (zeichnerisch nicht dargestellt) vor dem Schmelzvorgang an den Kreuzungspunkten erfolgen. Beim anschließenden Schmelzen der Schmelzfasern findet dann ebenfalls eine Verfestigung statt. Die erforderliche Linearität wird dabei bereits vom Automaten beim Aufbringen bewerkstelligt, indem die Schmelzfasern an den Kreuzungspunkten entlang eines bestimmten Fadens angebracht werden.

Ergänzend ist darauf hinzuweisen, daß bei einem derartigen Band eine Ablösung von Fasern des Bandes nahezu vollständig verhindert wird. Dadurch können die Fasern auch nicht in das Endprodukt, die Zigarette, gelangen, wo sie zumindest den Geschmack negativ beeinflussen.

**Ansprüche**

1. Luftdurchlässiges, umlaufendes Förderband (Saugband 1) zum Fördern eines Tabakstranges in einer Zigarettenstrangmaschine, dessen parallel zueinander angeordnete Kettfäden (10,12,28,31) und parallel zueinander angeordnete, sich von Rand zu Rand des Bandes erstreckende Abschnitte (11a,13a,27a,30a) von Schußfäden (11,13,27,30) in einem regelmäßigen Gitter liegende Kreuzungspunkte (14) bilden, wobei die Kettfäden und die Schußfäden aus Kunststoff bestehen, dadurch gekennzeichnet, daß wenigstens ein Kettfaden (28,31) und/oder wenigstens ein Schußfaden (27,30) aus wenigstens einer Trägerfaser (16,18) und aus wenigstens einer Schmelzfaser (15,19) gebildet ist und durch die Menge der Schmelzfaser (15,19) im Vergleich zu der Menge der Trägerfaser (16,18) die Stärke und Größe der Bindungspunkte (29,32) so beeinflußt wird, daß die durch Schmelzen aus den Kreuzungspunkten (14) entstehenden Bindungspunkte (29,32) linear angeordnet sind.

2. Förderband nach Anspruch 1, dadurch gekennzeichnet, daß die monofile oder multifile Schmelzfaser (15) aus niederschmelzendem Kunststoff besteht und mit anderen höher schmelzenden Trägerfasern (16) zur Bildung eines Fadens verzwirnt ist.

3. Förderband nach Anspruch 1, dadurch gekennzeichnet, daß die monofile oder multifile Schmelzfaser aus niederschmelzendem Kunststoff besteht und mit anderen höher schmelzenden Trägerfasern zu einem Faden gefacht ist.

4. Förderband nach Anspruch 1, dadurch gekennzeichnet, daß der (Kett- oder Schuß-) Faden (17) ein Zweikomponentenfaden ist, dessen als Trägerfaser ausgebildeter Kern (18) aus Material mit hohem Schmelzpunkt und dessen als monofile oder multifile Schmelzfaser ausgebildete Hülle (19) aus Material mit niedrigem Schmelzpunkt besteht.

5. Förderband nach einem der vorhergehenden Ansprüche, dadurch gekennzeichnet, daß die für das Schmelzen der aus multifilen Fasern bestehenden Schmelzfaser, wie zum Beispiel Polyamide oder Polyester, erforderliche Temperatur durch Mischen von Gruppen verschiedener Schmelzfasern bis zur eutektischen Temperatur absenkbar ist.

6. Förderband nach einem der Ansprüche 1 bis 4, dadurch gekennzeichnet, daß die Schmelzfaser eine extrudierte monofile Faser ist.

7. Förderband nach einem der vorhergehenden Ansprüche, dadurch gekennzeichnet, daß das Verkleben der Schmelzfaser durch Zufuhr von Lösungsmitteln, bzw. von Lösungsmitteldämpfen erreichbar ist.

8. Förderband nach einem der Ansprüche 1 bis 6, dadurch gekennzeichnet, daß das Verkleben der Schmelzfaser durch Zufuhr von Wärme und Feuchtigkeit, zum Beispiel in Form von Wasserdampf, erreichbar ist.

9. Förderband nach einem der vorhergehenden Ansprüche, dadurch gekennzeichnet, daß der aus Schmelzfasern (15,19) und Trägerfasern (16,18) gebildete Faden als Kettfaden im Randbereich des Saugbandes (1) mit gegebenenfalls verringerten Seitenabständen der Kettfäden (28) verwendbar ist.

10. Förderband nach einem der vorhergehenden Ansprüche, dadurch gekennzeichnet, daß als Schmelzfaser (15,19) ein Thermoplast Verwendung findet, dessen Schmelzpunkt bei ungefähr 80° C bis 120° C liegt.

Fig.1

Fig. 2

Fig. 3

Fig. 4

Fig. 5

Fig. 6

FIG. 7

29

27a

28

27

FIG. 8

32

30

30a

31

FIG. 9